# EUROPÄISCHE PATENTSCHRIFT

(11) **EP 3 560 840 B1**
(45) Veröffentlichungstag und Bekanntmachung des Hinweises auf die Patenterteilung: **31.08.2022**
(21) Anmeldenummer: 18168886.2
(22) Anmeldetag: 24.04.2018
(51) Int. Cl.: B64F 1/305

(54) **FLUGGASTBRÜCKE MIT EINER SICHERHEITSEINRICHTUNG ZUM SCHUTZ EINER FLUGZEUGTÜR**
AIR PASSENGER BRIDGE WITH A SAFETY FEATURE FOR PROTECTING AN AIRCRAFT DOOR
PASSERELLE D'EMBARQUEMENT POURVUE D'UN DISPOSITIF DE SÉCURITÉ POUR PROTÉGER UNE PORTE D'AVION

(43) Veröffentlichungstag der Anmeldung: 30.10.2019
(73) Patentinhaber: Hübner GmbH & Co. KG, 34123 Kassel (DE)
(72) Erfinder: BITTOFF, Uwe, 34246 Vellmar (DE); KESSLER, Dirk W., 34246 Vellmar (DE)
(74) Vertreter: Walther Bayer Faber Patentanwälte PartGmbB

(56) Entgegenhaltungen:
- EP-A1- 3 088 305
- EP-A1- 3 301 028
- WO-A1-2018/034615
- US-A- 5 257 431
- US-A1- 2003 057 360
- US-A1- 2005 024 222

## Beschreibung

Die Erfindung betrifft eine Fluggastbrücke mit einem Kuppelmodul zur Ankopplung an ein Flugzeug, wobei das Kuppelmodul eine Bodeneinrichtung aufweist, die mit einer Vorderkante in einem Bereich unterhalb einer Flugzeugtür an einem Rumpf eines Flugzeugs anfahrbar ist, und wobei eine Sicherheitseinrichtung vorgesehen ist, die zur Vermeidung einer Kollision der Bodeneinrichtung mit der Flugzeugtür ausgebildet ist.

### STAND DER TECHNIK

Die DE 10 2014 104 065 B4 beschreibt eine Sicherheitseinrichtung zur Anordnung auf einer Bodeneinrichtung einer Fluggastbrücke. Die Sicherheitseinrichtung wird in einem Bereich auf der Bodeneinrichtung platziert, über dem eine geöffnete Flugzeugtür vorhanden ist, wenn das Kuppelmodul der Fluggastbrücke an das Flugzeug herangeführt und die Tür des Flugzeugs geöffnet ist. Beim Beladen des Flugzeugs kann der Rumpf des Flugzeugs leicht absinken. Befindet sich das Kuppelmodul mit der Bodeneinrichtung unmittelbar vor der Türöffnung des Flugzeugs, kann die geöffnete Tür mit der Bodeneinrichtung kollidieren, wenn das Flugzeug in der Höhe über der Aufstandsfläche absinkt. Insbesondere kann es vorkommen, dass plötzliche Sinkbewegungen des Flugzeugrumpfes auftreten, die begründet sind durch den Stick-Slip-Effekt im Fahrwerk des Flugzeugs.

Die Sicherheitseinrichtung ist häufig mobil ausgeführt und wird auch als Kontaktschuh oder als Sicherheitsschuh bezeichnet. Dieser muss vom Bediener der Fluggastbrücke auf der Bodeneinrichtung des Kuppelmoduls in den Bereich unter der geöffneten Flugzeugtür platziert werden.

Eine weitere Sicherheitseinrichtung ist aus der DE 201 15 011 U1 bekannt, die ebenfalls an der erforderlichen Stelle unterhalb der geöffneten Flugzeugtür auf der Bodeneinrichtung des Kuppelmoduls einer Fluggastbrücke positioniert werden muss. Die Sicherheitseinrichtung weist mehrere Schaltelemente auf, die bei einer Berührung der Flugzeugtür mit einer oberseitigen Abstützfläche aktiviert werden. Werden die zugehörigen Schaltelemente entsprechend ausgelöst, kann eine mit der Fluggastbrücke verbundene Höhenstelleinrichtung mit einem entsprechenden Hubelement über eine Steuereinrichtung so angesteuert werden, dass das Kuppelmodul mit der Senkbewegung des Flugzeugkörpers ebenfalls abgesenkt wird. Die bekannt gewordene Sicherheitseinrichtung ist mit vielen mechanischen Komponenten aufwendig ausgeführt und für einen Bediener der Fluggastbrücke nur bedingt handhabbar.

Wünschenswert ist eine Vereinfachung des Schutzes der Flugzeugtür vor einer Kollision mit einer Bodeneinrichtung, insbesondere dann, wenn der Flugzeugkörper aufgrund des Stick-Slip-Effektes plötzlich absinkt. Hierfür muss die Sicherheitseinrichtung so ausgeführt sein, dass das vertikale Nachführen der Fluggastbrücke und damit des Kuppelmoduls schnell erfolgt, da kein zu großer Abstand zwischen der geöffneten Flugzeugtür und der Bodeneinrichtung vorhanden sein kann, da die Bodeneinrichtung im Wesentlichen höhengleich ausgerichtet zum Flur der Passagierkabine des Flugzeugs bei geöffneter Flugzeugtür sein sollte. US 2005/024222 A1 offenbart ein Kuppelmodul, das ein vertikales Nachführen der Fluggastbrücke bei geöffneter Flugzeugtür ermöglicht.

### OFFENBARUNG DER ERFINDUNG

Aufgabe der Erfindung ist die Weiterbildung bekannter Sicherheitseinrichtungen zur Vermeidung einer Kollision einer geöffneten Flugzeugtür mit der Bodeneinrichtung eines Kuppelmoduls an einer Fluggastbrücke. Dabei soll die Sicherheitseinrichtung auch plötzliche Sinkbewegungen des Flugzeugkörpers erkennen können und mit einer entsprechenden Reaktion soll die Fluggastbrücke in der Höhe nachgeführt werden können. Darüber hinaus soll die Sicherheitseinrichtung so ausgeführt werden, dass diese für einen Bediener möglichst leicht bedienbar ist.

Diese Aufgabe wird ausgehend von einem Kuppelmodul gemäß dem Oberbegriff des Anspruches 1 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Sicherheitseinrichtung mittels wenigstens eines berührungslos wirkenden Näherungssensors gebildet ist, der in die Bodeneinrichtung integriert ist.

Kerngedanke der Erfindung ist die Vermeidung von beweglichen Sicherheitseinrichtungen in Form eines Sicherheitsschuhs oder Kontaktschuhs, der durch den Bediener der Fluggastbrücke nach Ausrichtung des Kuppelmoduls vor der Türöffnung des Flugzeugs unter die geöffnete Flugzeugtür bewegt werden muss. Dies wird erfindungsgemäß dadurch gelöst, dass als Sicherheitseinrichtung ein berührungslos wirkender Näherungssensor verwendet wird, der direkt in die Bodeneinrichtung des Kuppelmoduls integriert ist. Das manuelle Positionieren eines Sicherheitsschuhs oder Kontaktschuhs wird damit obsolet.

Gewöhnlich werden Kuppelmodule in immer gleicher Weise an die Türöffnung des Flugzeugs herangefahren, sodass die geöffnete Flugzeugtür auch grundsätzlich über dem gleichen Bereich der Bodeneinrichtung positioniert ist. Dabei kann auch Berücksichtigung finden, dass links öffnende und rechts öffnende Flugzeugtüren geschützt werden müssen, indem ein oder mehrere Näherungssensoren an entsprechend mehreren Positionen in der Bodeneinrichtung des Kuppelmoduls angeordnet werden.

Die Integration des Näherungssensors in der Bodeneinrichtung beschreibt dabei im Sinne der vorliegenden Erfindung jede Form einer festen Anordnung der Sicherheitseinrichtung an der Bodeneinrichtung. Dabei ist der Näherungssensor unterhalb der begehbaren Oberseite der Bodenenrichtung angeordnet, um zum Beispiel keine unnötigen Stolperstellen zu erzeugen und/oder das Risiko einer Beschädigung der Sicherheitseinrichtung zu minimieren. Die Sicherheitseinrichtung mit dem wenigstens einen Näherungssensor kann aber auch gemäß einem nicht beanspruchten Beispiel auf der Oberseite der Bodeneinrichtung aufgesetzt und an dieser befestigt sein.

Durch die berührungslose Wirkungsweise des Näherungssensors zur Erkennung der Annährung der Flugzeugtür wird der wesentliche Vorteil erreicht, dass der Näherungssensor auch bereits aus größerer Entfernung eine plötzliche Annährung der Unterseite der Flugzeugtür erkennen kann, um entsprechend kurzfristig ein Signal für eine Steuereinrichtung der Fluggastbrücke zu erzeugen und um das Höhenniveau der Fluggastbrücke entsprechend kurzfristig abzusenken. Eine solche vorherige, frühzeitige Erkennung einer Annäherung der Flugzeugtür zur Bodeneinrichtung ist bei taktil wirkenden Sicherheitseinrichtungen, beispielsweise mit den bewegbaren Sicherheitsschuhen, nicht möglich, da erst eine Berührung der Unterseite der Flugzeugtür mit dem Sicherheitsschuh erfolgen muss. Schnelle, plötzliche Absackbewegungen des Flugzeugrumpfes können folglich mit berührungslos wirkenden Sensoren deutlich effektiver erkannt und ein Aufschlagen der Flugzeugtür auf die Oberseite der Bodeneinrichtung der Fluggastbrücke vermieden werden.

Folgerichtig wird durch die Ausbildung der Sicherheitseinrichtung in Form wenigstens eines Näherungssensors ein taktiles Erkennen der Flugzeugtür vermieden, und der Bediener der Fluggastbrücke muss keine beweglichen Teile unter die Flugzeugtür legen. Insbesondere sind Näherungssensoren einsetzbar, mit denen sich auch über größere Entfernungen bereits kleine Annäherungen eines Gegenstandes erkennen lassen, sodass bereits eine geringe Annährung einer beispielsweise 0,02 m bis 0,03 m von der Bodeneinrichtung beabstandeten Flugzeugtür erkannt werden kann. So kann die Fluggastbrücke frühzeitig in der Vertikalen nachgeführt werden. Ein Nachführen der Fluggastbrücke muss jedoch nicht zwingend schon im Fall einer minimalen Annäherung erfolgen. Vielmehr kann eine Nachführbewegung davon abhängig gemacht werden, dass ein vorgegebener Grenzwert überschritten wird. Dieser kann z. B. fest vorgegeben sein. Er kann aber auch unmittelbar nach dem Positionieren der Fluggastbrücke relativ zu dem Flugzeug festgelegt werden. Z. B. kann als Grenzwert eine Annäherung um mehr als 10% des nach dem Positionieren mit dem Näherungssensor ermittelten Werts festgelegt werden.

Wenn die Näherungssensoren eine zeitaufgelöste Messung der Annäherungsbewegung z. B. der Flugzeugtür erlauben, kann zusätzlich eine Dynamik der Absackbewegung des Flugzeugs erfasst werden. Dies kann z. B. dazu genutzt werden, um die Fluggastbrücke mit einer entsprechenden Dynamik in der Vertikalen nachzuführen. D. h. wenn mit den Näherungssensoren erkannt wird, dass sich die Flugzeugtür vergleichsweise langsam annähert, führt dies nicht wie im Stand der Technik zwangsläufig zu einem schlagartigen Absacken der Fluggastbrücke. Vielmehr kann die Fluggastbrücke entsprechend langsam nachgeführt werden, um einerseits die Bodeneinrichtung in einem sicheren Abstand zu der Flugzeugtür zu halten und andererseits aber auch keine unnötig abrupte Nachführbewegung zu verursachen, die auf der Fluggastbrücke befindliche Passagiere irritieren könnte. Umgekehrt kann bei einer schlagartigen Annäherung der Flugzeugtür ein entsprechend schnelles Nachführen der Fluggastbrücke gewährleistet werden, um eine Kollision der Flugzeugtür mit der Bodeneinrichtung sicher zu vermeiden. Ebenso wäre eine Nachregelung der Fluggastbrücke auch nach oben denkbar, sofern der Sensor neben der Funktion des Sicherheitsschuhs auch die Funktion eines Autolevelers übernehmen sollte.

Gemäß einer möglichen vorteilhaften Ausgestaltung zur Integration des Näherungssensors kann dieser in einem Bereich unmittelbar hinter einer Vorderkante in der Bodeneinrichtung angeordnet sein. Beispielsweise können mehrere Näherungssensoren vorgesehen sein, die sich in einer Reihe nebeneinander in der Bodeneinrichtung befinden. Die Reihe, die aus mehreren nebeneinander angeordneten Näherungssensoren gebildet ist, kann sich beispielsweise parallel beabstandet zum Verlauf der Vorderkante der Bodeneinrichtung erstrecken. Insbesondere ist es vorteilhaft, mehrere Näherungssensoren in einer Reihe nebeneinander anzuordnen, da die seitliche Position der Flugzeugtür gegenüber der Bodeneinrichtung nicht konstant ist und von Mal zu Mal geändert werden kann. Das Kuppelmodul wird insbesondere nicht immer in der exakt gleichen Position vor einer Türöffnung eines Flugzeugs positioniert, und die genaue Position der Flugzeugtür ist zudem abhängig vom Flugzeugtyp. Sind mehrere Näherungssensoren in einer Reihe nebeneinander angeordnet, kann sichergestellt werden, dass einer oder eine Anzahl von Näherungssensoren die Tür des Flugzeugs mit besonders hoher Sicherheit sensieren. Um einen noch größeren Spielraum hinsichtlich der Position der Flugzeugtür relativ zu der Bodeneinrichtung zu haben, kann auch eine matrixartige Anordnung von mehreren Näherungssensoren vorgesehen sein.

Die Sensorsignale der Näherungssensoren können zusätzlich auf Plausibilität geprüft werden. Bewegt beispielsweise ein Fluggast einen Gegenstand, beispielsweise ein Kleidungsstück, eine Tasche oder ähnliches, in den Sensorbereich der Näherungssensoren, insbesondere eines zur Türöffnung des Flugzeugs hin platzierter Näherungssensor, der damit in Richtung zum begehbaren Bereich der Bodeneinrichtung weist, so muss vermieden werden, dass durch Erkennung einer solchen kurzzeitigen Annährung eines Gegenstandes durch den Näherungssensor die Fluggastbrücke abgesenkt wird. Erfindungsgemäß kann die Sicherheitseinrichtung daher eine Verarbeitungseinheit aufweisen, mit der erkannt wird, ob eine Änderung des Abstandes eines sensierten Gegenstandes von einer vorgegebenen Anzahl von Näherungssensoren gleichermaßen erkannt wurde. Wenn dies der Fall ist, kann aus einer gewissen Plausibilität heraus darauf geschlossen werden, dass es sich tatsächlich um die Verringerung des Abstandes zu der Unterseite der Flugzeugtür handelt und nicht um einen beispielsweise von einem Fluggast in den Sensorbereich bewegten sonstigen Gegenstand. D. h. erst in diesem Fall wird ein Signal zum Absenken der Fluggastbrücke erzeugt.

Beispielsweise ist der Näherungssensor als kapazitiver Sensor ausgebildet. Kapazitive Sensoren basieren darauf, dass eine Änderung einer elektrischen Kapazität einer Umgebung erkannt wird, die beispielsweise durch das Bewegen eines Gegenstandes in der Nähe des Näherungssensors verursacht wird. Der Vorteil von kapazitiv wirkenden Sensoren ist durch ihren einfachen Aufbau gegeben. Außerdem kann mit einem kapazitiven Sensor auch über eine größere Distanz bereits eine Bewegung eines Gegenstandes erkannt werden. Im Sinne der Erfindung können auch Ultraschallsensoren Verwendung finden und den wenigstens einen Näherungssensor bilden, sodass auch ein Näherungssensor eingesetzt werden kann, der ein Schallsignal aussendet und keine elektromagnetische Welle. Ferner kann der Näherungssensor als Radarsensor ausgebildet sein, der ein Radarsignal aussendet. Insbesondere lässt sich mit einem als Radarsensor ausgebildeten Näherungssensor ein Abstand bzw. eine Abstandsänderung sehr genau ermitteln.

Alternativ oder zusätzlich kann ein Näherungssensor zur Bildung der Sicherheitseinrichtung als induktiver Sensor ausgebildet sein. Induktive Sensoren basieren auf der Änderung der Induktivität der Umgebung, sodass eine entsprechende Sensierung einer sich ändernden Induktivität auch durch eine insbesondere vertikal bewegte Flugzeugtür im Sensor-Erfassungsbereich eines induktiven Sensors ermittelt werden kann.

Weiterhin besteht die Möglichkeit, dass wenigstens ein Näherungssensor als optischer Sensor ausgebildet ist. Beispielsweise kann der Näherungssensor eine Lichtquelle aufweisen, die mit einem Lichtdetektor zusammenwirkt. Mit besonderem Vorteil kann vorgesehen sein, dass der wenigstens eine Näherungssensor eine Laserstrahlquelle und einen Laserdetektor aufweist. Generell besteht dabei die Möglichkeit, den Näherungssensor so auszubilden, dass dieser zur Abstrahlung einer elektromagnetischen Welle oder eines Ultraschallsignals oder eines Radarsignals ausgebildet ist. Dabei ist der Frequenzbereich der elektromagnetischen Welle im Sinne der Erfindung nicht zwingend begrenzt und kann jede technisch sinnvolle Frequenz betreffen. Damit kann der Näherungssensor beispielsweise im visuellen Bereich wirken, wobei auch die Möglichkeit besteht, dass der Näherungssensor nicht sichtbares Licht emittiert, beispielsweise Laserlicht im infraroten Bereich. Darüber hinaus besteht die Möglichkeit, dass der Näherungssensor als Radar ausgeführt ist und Radarwellen mit einem zugeordneten Wellenlängenbereich emittiert. Beispielsweise besteht die Möglichkeit, zur Bildung des Näherungssensors in die Bodeneinrichtung des Kuppelmoduls eine Radarantenne zu integrieren, mit der die geöffnete Flugzeugtür des Flugzeugs erkannt werden kann. Ist der Näherungssensor als Ultraschallsensor ausgebildet, so kann dieser einen ähnlichen antennenartigen Aufbau aufweisen wie bei einer Einparkhilfe eines Fahrzeugs.

Die Bodeneeinrichtung weist eine begehbare Oberseite auf, wobei der wenigstens eine Näherungssensor unterhalb der Oberseite angeordnet ist. Wie bereits ausgeführt, besteht zudem die Möglichkeit, im Sinne der Integration der Sicherheitseinrichtung den Näherungssensor auch oberseitig der Bodeneinrichtung zu befestigen, sodass dieser aus der Oberseite der Bodeneinrichtung herausragt. Mit weiterem Vorteil kann die Integration des wenigstens einen Näherungssensors so ausgeführt sein, dass oberhalb des Näherungssensors ein Abdeckelement angeordnet ist, wobei das Abdeckelement für elektromagnetische Wellen umfassend insbesondere visuelles und/oder infrarotes Licht transparent ausgebildet ist. Das Abdeckelement, beispielsweise ausgebildet aus Glas oder Kunststoff, kann so robust ein, dass auch der Bereich der Bodeneinrichtung begehbar ist, unter dem die Sicherheitseinrichtung in Form des wenigstens einen Näherungssensors integriert ist.

Im Sinne der Erfindung können auch verschieden ausgeführte Näherungssensoren die Sicherheitseinrichtung bilden. Beispielsweise kann ein kapazitiv wirkender Sensor mit einem induktiv wirkenden Sensor kombiniert werden. Zudem besteht die Möglichkeit, auch einen optischen Sensor mit einem kapazitiven und/oder mit einem induktiven Sensor zu kombinieren. Ferner kann vorgesehen sein, einen Radarsensor zu verwenden, der als Näherungssensor dient und in Verbindung mit einem kapazitiven, einem induktiven und/oder einem optischen Sensor kombiniert ausgeführt ist.

Weiter besteht die Möglichkeit, dass in Verbindung mit der Integration des Näherungssensors in die Bodeneinrichtung wenigstens ein Signalmittel mit in die Bodeneinrichtung integriert ist, das zur Anzeige eines Betriebszustandes der Sicherheitseinrichtung ausgebildet ist.

Mit weiterem Vorteil ist der wenigstens eine Näherungssensor als kapazitiv, induktiv oder optisch wirkender Näherungssensor ausgebildet und/oder es ist vorgesehen, dass der wenigstens eine Näherungssensor zur Abstrahlung einer elektromagnetischen Welle ausgebildet ist. Die weiteren Merkmale und Vorteile der Fluggastbrücke finden für das erfindungsgemäße Kuppelmodul ebenfalls Anwendung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht einer Fluggastbrücke mit einem vorderseitigen Kuppelmodul und einer Bodeneinrichtung des Kuppelmoduls,
- Figur 2: eine Vorderansicht des Kuppelmoduls mit der Bodeneinrichtung und einer erfindungsgemäß ausgeführten Sicherheitseinrichtung,
- Figur 3: eine perspektivische Ansicht des Kuppelmoduls mit der erfindungsgemäß ausgeführten Sicherheitseinrichtung,
- Figur 4: eine Detailansicht der beispielhaften Anordnung von Näherungssensoren in der Bodeneinrichtung und
- Figur 5: eine schematische Ansicht der Bodeneinrichtung mit integrierten Näherungssensoren und einem Signalmittel.

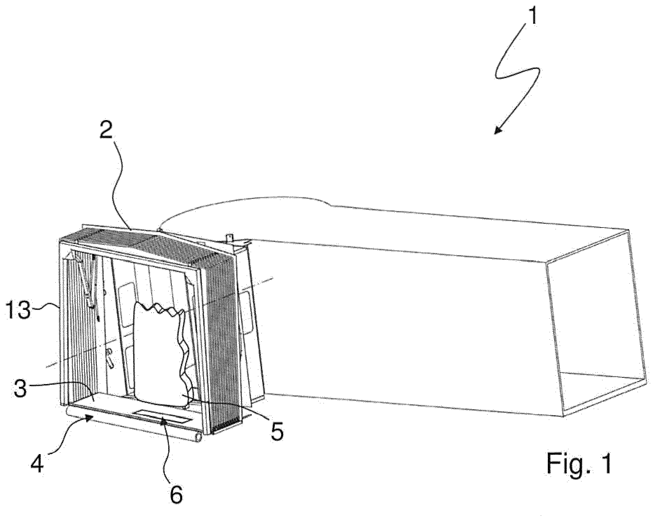

Figur 1 zeigt eine perspektivische Ansicht einer Fluggastbrücke 1 mit einem Kuppelmodul 2 zur Ankopplung an ein Flugzeug. Unterseitig weist das Kuppelmodul 2 eine begehbare Bodeneinrichtung 3 auf, über die Flugpassagiere von der Fluggastbrücke 1 das Flugzeug betreten können beziehungsweise über die Passagiere aus dem Flugzeug in die Fluggastbrücke 1 gelangen können. Vorderseitig ist an der Bodeneinrichtung 3 eine Vorderkante 4 vorhanden, die beispielsweise aus einem sehr nachgiebigen Material aufgebaut ist, um Beschädigungen der Außenhaut des Flugzeugs zu vermeiden. Die Bodeneinrichtung 3 ist mit einem Faltenvordach 13 überspannt. Wird das Kuppelmodul 2 an die Türöffnung eines Flugzeugs angesetzt, so kann das Faltenvordach 13 auch an den Flugzeugrumpf angelegt werden, um eine durchgehende Überdachung von der Fluggastbrücke 1 in das Flugzeug zu schaffen.

Die Erfindung betrifft eine Sicherheitseinrichtung 6, die dazu dient, eine Höhe einer Flugzeugtür 5 des Flugzeugs über der Bodeneinrichtung 3 zu sensieren, um eine Kollision der Flugzeugtür 5 mit der Bodeneinrichtung 3 der Fluggastbrücke 1 zu vermeiden. Gemäß der Erfindung ist die Sicherheitseinrichtung 6 berührungslos wirkend ausgebildet und umfasst Näherungssensoren, die in der Bodeneinrichtung 3 eingelassen sind. Mit den folgenden Figuren wird die Sicherheitseinrichtung 6, auf die sich die Erfindung bezieht, näher dargestellt.

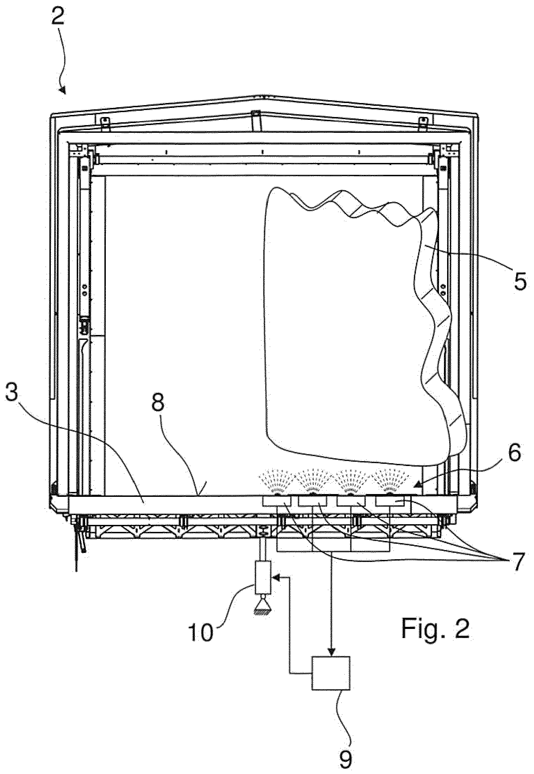

Die Figur 2 zeigt in einer Vorderansicht das Kuppelmodul 2 mit der unterseitig angeordneten, begehbaren Bodeneinrichtung 3. In den Öffnungsbereich des Kuppelmoduls 2 ragt eine teilweise dargestellte Flugzeugtür 5 hinein, die sich durch den Öffnungszustand in einem Abstand über der Bodeneinrichtung 3 befindet.

Die Flugzeugtür 5 weist in vertikaler Richtung einen gewissen Abstand zu der begehbaren Oberseite 8 der Bodeneinrichtung 3 auf. Senkt sich das Flugzeug und somit auch die Flugzeugtür 5 ab, so kann die Unterseite der Flugzeugtür 5 mit der Oberseite 8 der Bodeneinrichtung 3 kollidieren. Um diese Kollision zu vermeiden, dienen zur frühzeitigen Erkennung einer Verringerung des vertikalen Abstandes der Bodeneinrichtung 3 zur Flugzeugtür 5 Näherungssensoren 7, die die Sicherheitseinrichtung 6 zur Vermeidung einer Kollision bilden. Die Näherungssensoren 7 sind als berührungslos wirkende Sensoren ausgeführt. Verringert sich der Abstand der bodenfesten Näherungssensoren 7 und damit der Bodeneinrichtung 3 zur Flugzeugtür 5, so kann ein Signal an eine Steuereinrichtung 9 übermittelt werden, die mit einem Hubelement 10 einer Höhenstelleinrichtung der Fluggastbrücke 1 zusammenwirkt. Das Hubelement 10 wird dann so angesteuert, dass bei einem Absinken der Flugzeugtür 5 die Fluggastbrücke 1 mit dem Kuppelmodul 2 ebenfalls absinkt, um den notwendigen Abstand zwischen der Bodeneinrichtung 3 und der Flugzeugtür 5 wieder herzustellen.

Die Ansicht in Fig. 2 zeigt die Sicherheitseinrichtung 6 in Form mehrerer Näherungssensoren 7, die beispielhaft in einer Reihe angeordnet in die Bodeneinrichtung 3 integriert sind. Dabei befinden sich die Näherungssensoren 7 unterhalb der begehbaren Oberseite 8 der Bodeneinrichtung 3. Im Rahmen der Erfindung können die Näherungssensoren 7 jedoch auch in oder über der Oberseite 8 der Bodeneinrichtung 3 fest angeordnet sein.

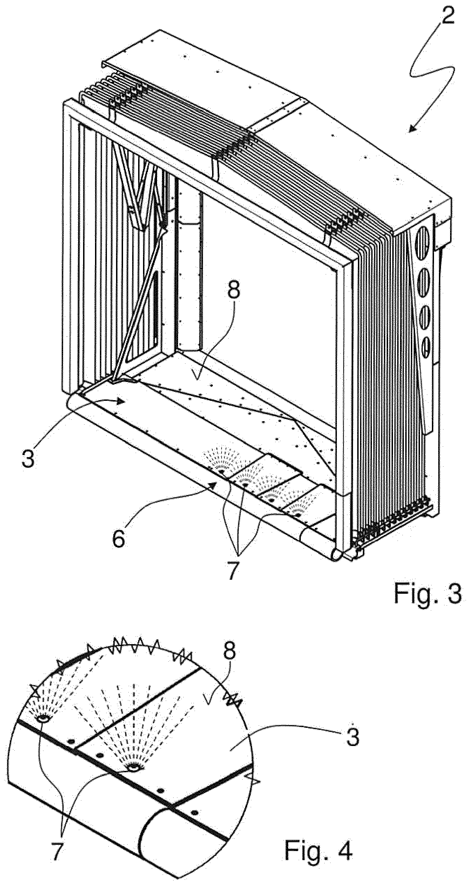

Figur 3 zeigt in einer perspektivischen Ansicht die Näherungssensoren 7 in der Bodeneinrichtung 3 des Kuppelmoduls 2. Die Ansicht zeigt die Näherungssensoren 7 beispielhaft in einer Reihe nebeneinander angeordnet. Die Näherungssensoren 7 befinden sich dabei in vorzugsweise nur geringem Abstand zur Vorderkante 4 der Bodeneinrichtung 3, sodass in nicht näher gezeigter Weise eine geöffnete Flugzeugtür eines Flugzeugs über den Näherungssensoren 7 sicher angeordnet ist, wenn das Kuppelmodul 2 an das Flugzeug angelegt wurde.

Figur 4 zeigt eine Detailansicht der Näherungssensoren 7 in einer in die Bodeneinrichtung 3 integrierten Anordnung. Die Näherungssensoren 7 befinden sich dabei unterhalb der begehbaren Oberseite 8 der Bodeneinrichtung 3 angrenzend an die Vorderkante 4, mit der die Bodeneinrichtung 3 gegen die Außenhaut des Flugzeugs bewegt wird. Die Näherungssensoren 7 sind beispielhaft mit einer Lichtabstrahlung gezeigt, was deutlich macht, dass sich oberhalb der Näherungssensoren 7 der Erkennungsbereich der Näherungssensoren 7 zur Erfassung der Flugzeugtür 5 befindet. Die Näherungssensoren 7 können auch als kapazitiv oder induktiv wirkende Sensoren ausgeführt sein, wobei auch die Verwendung akustischer oder optischer Sensoren möglich ist. Insbesondere können die Näherungssensoren eine Laserstrahlquelle und einen Laserdetektor aufweisen. Auch ist es denkbar, dass der Näherungssensor 7 als Radarantenne ausgeführt ist. Grundsätzlich kann der Näherungssensor 7 derart beschrieben werden, dass dieser zur Abstrahlung eines Schallsignals oder einer elektromagnetischen Welle ausgebildet ist, sodass bei der Änderung eines Abstandes eines Gegenstandes im Erfassungsbereich des Näherungssensors 7 diese Änderung erkannt werden kann.

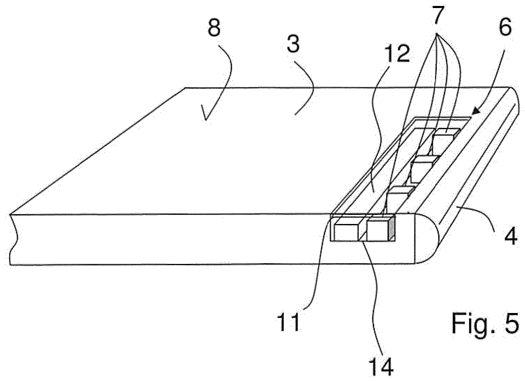

Figur 5 zeigt eine weitergebildete Ausgestaltung der Anordnung der Näherungssensoren 7 in die Bodeneinrichtung 3. Die Bodeneinrichtung 3 weist einen Einbauraum zur Anordnung der Näherungssensoren 7 unter der begehbaren Oberfläche 8 der Bodeneinrichtung 3 auf, wobei ferner ein Signalmittel 12 mit den Näherungssensoren 7 in die Bodeneinrichtung 3 integriert ist. Wird die Sicherheitseinrichtung 6 mit den Näherungssensoren 7 aktiviert, so kann zugleich das Signalmittel 12 aktiviert werden. Das Signalmittel 12 kann beispielsweise für einen Bediener der Fluggastbrücke sichtbares Licht emittieren, beispielsweise in blauer Farbe. Dadurch erfährt der Bediener der Fluggastbrücke eine Rückmeldung von der Sicherheitseinrichtung 6, dass diese aktiv geschaltet ist und eine Überwachung des Abstandes der Bodeneinrichtung 3 des Kuppelmoduls zur geöffneten Flugzeugtür stattfindet, Die Ansicht zeigt ferner eine Ausgestaltung, bei der der Einbauraum 14 zur Aufnahme der Näherungssensoren 7 der Sicherheitseinrichtung 6 und zur Aufnahme des Signalmittels 12 vorderseitig und angrenzend an die Vorderkante 4 der Bodeneinrichtung 3 ausgebildet ist.

Zum Abschluss des Einbauraums 14 nach oben ist, wie in Figur 5 angedeutet, ein Abdeckelement 11 vorgesehen, welches den Einbauraum 14 flächenbündig mit der Oberfläche 8 der Bodeneinrichtung 3 abschließt. Das Abdeckelement 11 ist dabei transparent, so dass das von dem Signalmittel 12 emittierte Licht dennoch sicher von einem Bediener Fluggastbrücke erkannt werden kann. Gleichzeitig ist das Abdeckelement 11 so gestaltet, dass mit den Näherungssensoren 7 noch sicher eine Annäherung der Flugzeugtür erkannt werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 1: Fluggastbrücke
- 2: Kuppelmodul
- 3: Bodeneinrichtung
- 4: Vorderkante
- 5: Flugzeugtür
- 6: Sicherheitseinrichtung
- 7: Näherungssensor
- 8: begehbare Oberseite
- 9: Steuereinrichtung
- 10: Hubelement
- 11: Abdeckelement
- 12: Signalmittel
- 13: Faltenvordach
- 14: Einbauraum

## Patentansprüche

1. Kuppelmodul (2) für eine Fluggastbrücke (1) zur Ankopplung an ein Flugzeug, wobei das Kuppelmodul (2) eine Bodeneinrichtung (3) aufweist, die mit einer Vorderkante (4) in einem Bereich unterhalb einer geöffneten Flugzeugtür (5) an einen Rumpf eines Flugzeugs anfahrbar ist, wobei die Bodeneinrichtung eine begehbare Oberseite (8) aufweist,
und wobei eine Sicherheitseinrichtung (6) vorgesehen ist, die zur Vermeidung einer Kollision der Bodeneinrichtung (3) mit der geöffneten Flugzeugtür (5) ausgebildet ist,
**dadurch gekennzeichnet,**
**dass** die Sicherheitseinrichtung (6) mittels wenigstens eines berührungslos wirkenden Näherungssensors (7) gebildet ist, der zur Erkennung einer Verringerung des vertikalen Abstands der Bodeneinrichtung (3) zu der geöffneten Flugzeugtür (5) dient und der direkt in die Bodeneinrichtung (3) unterhalb der begehbaren Oberseite der Bodeneinrichtung (3) angeordnet ist.

2. Kuppelmodul (2) nach Anspruch 1,
**dadurch gekennzeichnet,**
**dass** der Näherungssensor (7) dazu ausgebildet ist, eine Annäherung der Flugzeugtür (5) zeitaufgelöst zu erfassen.

3. Kuppelmodul (2) nach Anspruch 1 oder 2,
**dadurch gekennzeichnet,**
**dass** der Näherungssensor (7) in einem an die Vorderkante (4) angrenzenden Bereich in der Bodeneinrichtung (3) angeordnet ist.

4. Kuppelmodul (2) nach einem der vorgenannten Ansprüche,
**dadurch gekennzeichnet,**
**dass** mehrere Näherungssensoren (7) in einer Reihe nebeneinander oder matrixartig in der Bodeneinrichtung (3) angeordnet sind.

5. Kuppelmodul (2) nach einem der vorgenannten Ansprüche,
**dadurch gekennzeichnet,**
**dass** die Sicherheitseinrichtung (6) mehrere Näherungssensoren (7) umfasst und eine Verarbeitungseinheit aufweist zum Erkennen, ob eine vorgegebene Anzahl der Näherungssensoren (7) eine Annäherung der Flugzeugtür (5) sensieren.

6. Kuppelmodul (2) nach einem der vorgenannten Ansprüche,
**dadurch gekennzeichnet,**
**dass** der wenigstens eine Näherungssensor (7) als kapazitiver Sensor ausgebildet ist.

7. Kuppelmodul (2) nach einem der Ansprüche 1 bis 5,
**dadurch gekennzeichnet,**
**dass** der wenigstens eine Näherungssensor (7) als induktiver Sensor ausgebildet ist.

8. Kuppelmodul (2) nach einem der Ansprüche 1 bis 5,
**dadurch gekennzeichnet,**
**dass** der wenigstens eine Näherungssensor (7) als optischer Sensor ausgebildet ist.

9. Kuppelmodul (2) nach Anspruch 8,
**dadurch gekennzeichnet,**
**dass** der wenigstens eine Näherungssensor (7) eine Laserstrahlquelle und einen Laserdetektor aufweist.

10. Kuppelmodul (2) nach einem der vorgenannten Ansprüche,
**dadurch gekennzeichnet,**
**dass** der wenigstens eine Näherungssensor (7) zur Abstrahlung einer elektromagnetischen Welle oder eines Ultraschallsignals oder eines Radarsignals ausgebildet ist.

11. Kuppelmodul (2) nach einem der vorgenannten Ansprüche,
**dadurch gekennzeichnet,**
**dass** der wenigstens eine Näherungssensor (7) mit einem Abdeckelement (11) oberseitig abgedeckt ist, wobei das Abdeckelement (11) für elektromagnetische Wellen umfassend visuelles, infrarotes Licht und/oder Laserstrahlung transparent ausgebildet ist.

12. Kuppelmodul (2) nach einem der vorgenannten Ansprüche,
**dadurch gekennzeichnet,**
**dass** in Verbindung mit der Integration des Näherungssensors (7) in die Bodeneinrichtung (3) wenigstens ein Signalmittel (12) mit in die Bodeneinrichtung (3) integriert ist, das zur Anzeige eines Betriebszustandes der Sicherheitseinrichtung (6) ausgebildet ist.

13. Fluggastbrücke (1) mit einem Kuppelmodul (2) nach einem der vorgenannten Ansprüche.

## Claims

1. A coupling module (2) for an air passenger bridge (1) for coupling to an aircraft, wherein the coupling module (2) has a floor device (3) whose front edge (4) can be traveled in a region below an open aircrafts door (5) to a fuselage of an aircraft, and wherein the floor device has a walkable upper side (8);
and wherein a safety device (6) is provided that is configured to avoid a collision of the floor device (3) with the open aircraft door (5), **characterized in that**
the safety device (6) is formed by means of at least one proximity sensor (7) that acts contactlessly, that serves the recognition of a reduction of the vertical distance of the floor device (3) from the open aircraft door (5), and that is directly arranged in the floor device (3) below the walkable upper side of the floor device (3).

2. A coupling module (2) in accordance with claim 1,
**characterized in that**
the proximity sensor (7) is configured to detect an approach of the aircraft door (5) with time resolution.

3. A coupling module (2) in accordance with claim 1 or claim 2,
**characterized in that**
the proximity sensor (7) is arranged in a region in the floor device (3) adjacent to the front edge (4).

4. A coupling module (2) in accordance with one of the preceding claims,
**characterized in that**
a plurality of proximity sensors (7) are arranged next to one another in a row or in a matrix-like manner in the floor device (3).

5. A coupling module (2) in accordance with one of the preceding claims,
**characterized in that**
the safety device (6) comprises a plurality of proximity sensors (7) and has a processing unit to recognize whether a predefined number of the proximity sensors (7) sense an approach of the aircraft door (5).

6. A coupling module (2) in accordance with one of the preceding claims,
**characterized in that**
the at least one proximity sensor (7) is configured as a capacitive sensor.

7. A coupling module (2) in accordance with one of the claims 1 to 5,
**characterized in that**
the at least one proximity sensor (7) is configured as an inductive sensor.

8. A coupling module (2) in accordance with one of the claims 1 to 5,
**characterized in that**
the at least one proximity sensor (7) is configured as an optical sensor.

9. A coupling module (2) in accordance with claim 8,
**characterized in that**
the at least one proximity sensor (7) has a laser beam source and a laser detector.

10. A coupling module (2) in accordance with one of the preceding claims,
**characterized in that**
the at least one proximity sensor (7) is configured to irradiate an electromagnetic wave or an ultrasonic signal or a radar signal.

11. A coupling module (2) in accordance with one of the preceding claims,
**characterized in that**
the at least one proximity sensor (7) is covered at the upper side by a top element (11), with the top element (11) being transparent for electromagnetic waves comprising visual, infrared light and/or laser radiation.

12. A coupling module (2) in accordance with one of the preceding claims,
**characterized in that**
in conjunction with the integration of the proximity sensor (7) in the floor device (3), at least one signaling means (12) is also integrated in the floor device (3) and is configured to display an operating state of the safety device (6).

13. An air passenger bridge (1) having a coupling module (2) in accordance with one of the preceding claims.

## Revendications

1. Module d'accouplement (2) pour une passerelle d'embarquement
(1) destiné à l'accouplement à un avion, le module d'accouplement
(2) comportant un dispositif de plancher (3), qui peut être amené avec un bord avant (4) dans une zone sous une porte d'avion (5) ouverte sur un fuselage d'un avion, le dispositif de plancher comportant un côté supérieur (8) praticable,
et un dispositif de sécurité (6) étant prévu, qui est conçu pour empêcher une collision du dispositif de plancher (3) avec la porte d'avion (5) ouverte,
**caractérisé en ce que**
le dispositif de sécurité (6) est formé au moyen d'au moins un capteur de proximité (7) opérant sans contact, lequel sert à reconnaître une diminution de la distance verticale entre le dispositif de plancher (3) et la porte d'avion (5) ouverte et lequel est disposé directement dans le dispositif de plancher (3) sous le côté supérieur praticable du dispositif de plancher (3).

2. Module d'accouplement (2) selon la revendication 1,
**caractérisé en ce que**
le capteur de proximité (7) est conçu pour détecter un rapprochement de la porte d'avion (5) avec résolution temporelle.

3. Module d'accouplement (2) selon la revendication 1 ou 2,
**caractérisé en ce que**
le capteur de proximité (7) est disposé dans une zone adjacente au bord avant (4) dans le dispositif de plancher (3).

4. Module d'accouplement (2) selon l'une des revendications précédentes,
**caractérisé en ce que**
plusieurs capteurs de proximité (7) sont disposés dans le dispositif de plancher (3) en un rang les uns à côté des autres ou sous forme de matrice.

5. Module d'accouplement (2) selon l'une des revendications précédentes,
**caractérisé en ce que**
le dispositif de sécurité (6) comprend plusieurs capteurs de proximité (7) et comporte une unité de traitement pour reconnaître si un nombre prédéfini des capteurs de proximité (7) détecte un rapprochement de la porte d'avion (5).

6. Module d'accouplement (2) selon l'une des revendications précédentes,
**caractérisé en ce que**
l'au moins un capteur de proximité (7) est réalisé sous la forme d'un capteur capacitif.

7. Module d'accouplement (2) selon l'une des revendications 1 à 5,
**caractérisé en ce que**
l'au moins un capteur de proximité (7) est réalisé sous la forme d'un capteur inductif.

8. Module d'accouplement (2) selon l'une des revendications 1 à 5,
**caractérisé en ce que**
l'au moins un capteur de proximité (7) est réalisé sous la forme d'un capteur optique.

9. Module d'accouplement (2) selon la revendication 8,
**caractérisé en ce que**
l'au moins un capteur de proximité (7) comporte une source de faisceau laser et un détecteur laser.

10. Module d'accouplement (2) selon l'une des revendications précédentes,
**caractérisé en ce que**
l'au moins un capteur de proximité (7) est conçu pour émettre une onde électromagnétique ou un signal ultrasonore ou un signal radar.

11. Module d'accouplement (2) selon l'une des revendications précédentes,
**caractérisé en ce que**
l'au moins un capteur de proximité (7) est recouvert côté supérieur avec un élément de recouvrement (11), l'élément de recouvrement (11) étant conçu transparent pour les ondes électromagnétiques comprenant la lumière visuelle, infrarouge et/ou le rayonnement laser.

12. Module d'accouplement (2) selon l'une des revendications précédentes,
**caractérisé en ce que**
en liaison avec l'intégration du capteur de proximité (7) dans le dispositif de plancher (3), au moins un moyen de signalisation (12) est aussi intégré dans le dispositif de plancher (3), lequel est conçu pour afficher un état de fonctionnement du dispositif de sécurité (6).

13. Passerelle d'embarquement (1) équipée d'un module d'accouplement (2) selon l'une des revendications précédentes.
